# EUROPÄISCHE PATENTANMELDUNG

(11) **EP 1 275 852 A2**
(43) Veröffentlichungstag der Anmeldung: **15.01.2003**
(21) Anmeldenummer: 02012671.0
(22) Anmeldetag: 07.06.2002
(51) Int. Cl.: F04D 27/02, F04D 25/04

(54) **Abgasturbolader in einer Brennkraftmaschine**

(30) Priorität: 11.07.2001 DE 10133669
(71) Anmelder: DaimlerChrysler AG, 70567 Stuttgart (DE)
(72) Erfinder: Finger, Helmut, 70771 Leinfelden-Echterdingen (DE); Fledersbacher, Peter, 70619 Stuttgart (DE); Martin, Roger, 5504 Othmarsingen (CH); Sumser, Siegfried, 70184 Stuttgart (DE)

(57) **Zusammenfassung**

Ein Abgasturbolader (2) in einer Brennkraftmaschine (1) weist eine Turbine (5) und einen von der Turbine (5) angetriebenen Verdichter (8) auf, der ein Verdichterrad in einem Verdichterströmungskanal umfasst. Ein Bypass (15) zum Verdichterrad (8) kommuniziert über eine erste Strömungsöffnung (16) mit dem Einströmkanal (11) und über eine zweite Strömungsöffnung (18) mit dem Verdichter-Abströmbereich stromab der Austrittskante (26) des Verdichterrades (8). Im Bypass (15) ist ein zwischen einer Schließstellung und einer Öffnungsstellung verstellbares Sperrorgan (19) zur veränderlichen Einstellung des wirksamen Strömungsquerschnitts des Bypass (15) vorgesehen.

Das verstellbare Sperrorgan (19) ist in der zweiten Strömungsöffnung (18) zum Verdichter-Abströmbereich angeordnet.

## Beschreibung

Die Erfindung betrifft einen Abgasturbolader in einer Brennkraftmaschine nach dem Oberbegriff des Anspruches 1.

Das Verhalten von Verdichtern von Abgasturboladern kann durch ein Kennfeld beschrieben werden, in welchem das Druckverhältnis über dem Verdichter in Abhängigkeit des durch den Verdichter durchgesetzten Massenstromes dargestellt ist. Der Verdichterbetrieb wird in Richtung kleiner Massenströme von einer Pumpgrenze und in Richtung großer Massenströme von einer Stopfgrenze begrenzt. Bei einem Verdichterbetrieb nahe der Pumpgrenze kommt es an den Schaufeln des Verdichterrades zu örtlich begrenzten Abrisszonen, die ein Pulsieren der Strömung mit einem periodischen Wechsel der Strömungsrichtung zur Folge haben können. Die Stopfgrenze wird andererseits bei hohen Massendurchsätzen im oberen Motor-Drehzahl-Bereich erreicht; die Stopfgrenze ergibt sich dadurch, dass bei großen Durchsätzen am Verdichterradeintritt - der in der Regel der engste Querschnitt im Verdichter ist - Schallgeschwindigkeit erzielt und somit der Durchsatz nicht weiter gesteigert werden kann.

Um den Arbeitsbereich von Verdichtern zu erweitern, können sogenannte Kennfeld-Stabilisierungs-Maßnahmen vorgesehen sein, welche sowohl die Pumpgrenze als auch die Stopfgrenze zugunsten eines erweiterten Arbeitsbereiches verschieben. So ist es beispielsweise aus der Druckschrift DE 42 13 047 A1 bekannt, im Verdichtergehäuse parallel zum Verdichtereinströmkanal einen Bypass vorzusehen, der die Verdichterrad-Eintrittskante überbrückt. Bei einem Betrieb des Verdichters nahe der Pumpgrenze ermöglicht der Bypass eine Rezirkulatiön eines Teilmassenstromes entgegen der Hauptströmungsrichtung im Einströmkanal. Über den Bypass wird der zurückgeführte Teilmassenstrom dem Hauptmassenstrom wieder zugeführt und erneut in den Verdichter gefördert. Die Pumpgrenze wird hierdurch in Richtung kleinerer Massenströme verschoben.

Die Kennfeld-Stabilisierungs-Maßnahme führt außerdem zu einer Verschiebung der Stopfgrenze zugunsten größerer Massenströme. Der zusätzliche Bypass vergrößert den Gesamtquerschnitt, über den die Ansaugluft dem Verdichter zugeführt werden kann, wodurch insgesamt größere Volumenströme gefördert werden können.

Eine Kennfeld-Stabilisierungs-Maßnahme in Form eines die Verdichterrad-Eintrittskante überbrückenden Bypass ist auch aus der Druckschrift DE 198 23 247 C1 bekannt, deren Bypass den Verdichtereinströmkanal stromauf der Verdichterrad-Eintrittskante mit einem Spiralkanal auf der Austrittsseite des Verdichters verbindet, wobei in der Strömungsöffnung des Bypass zum Verdichtereinströmkanal ein verstellbares Leitgitter angeordnet ist, welches einen zusätzlichen Drall des rückgeführten Teilmassenstromes beim Wiedereintritt in den Strömungskanal in Richtung der Hauptströmung erzeugt. Über das Leitgitter kann der wirksame Strömungsquerschnitt des Bypass variabel eingestellt werden. Es ist insbesondere möglich, im Hauptbetriebsbereich des Verdichters zwischen der Pumpgrenze und der Stopfgrenze den Bypass abzusperren, so dass keine Teilmassenströme den Bypass passieren können und der gesamte Massenstrom durch den Strömungskanal des Verdichters geleitet wird. Hierdurch können störende Strömungswirbel im Strömungskanal vermieden und der Wirkungsgrad verbessert werden.

Von diesem Stand der Technik ausgehend liegt der Erfindung das Problem zugrunde, mit einfachen Mitteln einen Abgasturbolader mit einem Verdichter mit verbreitertem Kennfeld zu schaffen.

Dieses Problem wird erfindungsgemäß mit den Merkmalen des Anspruches 1 gelöst.

Das verstellbare Sperrorgan, über das der Bypass zu schließen bzw. freizugeben ist, sitzt in der Strömungsöffnung des Bypass zum Verdichter-Abströmbereich stromab des Verdichterrades. Die Position des Sperrorgans in der Strömungsöffnung zum Verdichter-Abströmbereich, bei dem es sich zweckmäßig um einen Spiralkanal des Verdichters handelt, bietet im Vergleich zu bisher üblichen Sperrorganen in der Strömungsöffnung zum Verdichter-Einströmkanal den Vorteil einer größeren Distanz zum Einströmkanal sowie zum Verdichterrad, was einen Raumgewinn für das Verdichterrad bedeutet und außerdem die Montagefreundlichkeit erheblich verbessert, da lediglich eine Montagebohrung zur Aufnahme des Sperrorgans in das Verdichtergehäuse eingebracht werden muss.

Das Sperrorgan ist insbesondere als Sperrventil ausgeführt, welches zwei diskrete Schaltstellungen - Öffnungsstellung oder Schließstellung - einnehmen kann. Die Ausführung als Sperrventil, welches zwischen zwei diskreten Positionen zu verstellen ist, zeichnet sich durch eine besondere Einfachheit aus, wobei die Schaltzustände "Bypass geschlossen" und "Bypass geöffnet" grundsätzlich zur Realisierung eines erweiterten Kennfelds des Verdichters ausreichen. Zweckmäßig wird lediglich bei einem Betrieb des Verdichters in der Nähe der Pumpgrenze der Bypass geöffnet, um eine gezielte Rezirkulation eines Teilmassenstromes zu ermöglichen, wodurch die Pumpgrenze zugunsten kleinerer Massenströme verschoben wird. Im Hauptbetriebsbereich des Verdichters zwischen Pumpgrenze und Stopfgrenze wird dagegen das Sperrorgan in seine Schließposition verstellt und der Bypass abgesperrt, so dass keine Teilmassenströme den Bypass passieren können und der gesamte Massenstrom durch den Strömungskanal des Verdichters geleitet wird.

Sofern die zweite Strömungsöffnung sich nicht stromab der Verdichterrad-Austrittskante, sondern noch im Bereich des Verdichterrades befindet, kann es auch zweckmäßig sein, bei einem Verdichterbetrieb nahe der Stopfgrenze das Sperrorgan zu öffnen, um den Gesamtquerschnitt in Strömungsrichtung zum Verdichterrad hin zu vergrößern und einen zusätzlichen Teilmassenstrom über den Bypass in der gleichen Strömungsrichtung wie die Hauptströmung dem Verdichterrad zuzuführen.

Befindet sich dagegen die zweite Strömungsöffnung des Bypass zum Verdichter-Abströmbereich stromab der Verdichterrad-Austrittskante, so wie dies insbesondere bei einer Verbindung des Bypass zum Spiralkanal des Verdichters der Fall ist, so wird vorteilhaft zur Vermeidung eines Druckverlustes bei einem Betrieb nahe der Stopfgrenze das Sperrorgan in seine Sperrstellung versetzt.

In einer vorteilhaften Ausführung ist das als Sperrventil ausgeführte Sperrorgan translatorisch zwischen seiner Öffnungs- und Schließstellung zu verstellen, wobei die Stellrichtung des Sperrventils bevorzugt parallel zur Laderachse des Abgasturboladers verläuft.

Das Sperrorgan ist bevorzugt mechanisch zwischen seiner Schließ- und Öffnungsstellung zu verstellen. Als Stelleinrichtung kann ein Pneumatikstellglied vorgesehen sein, welches zweckmäßig mit einem Druckluftspeicher verbunden ist, der die Stellenergie für das Pneumatikstellglied bzw. das Sperrorgan im Bypass liefert. Im Verbindungsweg zwischen Druckluftspeicher und Pneumatikstellglied kann ein Pneumatikventil angeordnet sein, das über Stellsignale einer Regel- und Steuereinheit einzustellen ist und die Druckluftzufuhr zum Pneumatikstellglied steuert.

Alternativ zu einem pneumatisch verstellbaren Stellglied kommen auch elektrische bzw. elektromagnetische oder hydraulische Stellglieder in Betracht.

Im Bypass kann ein Sammelraum mit erweitertem Querschnitt vorgesehen sein, durch den eine optimale Anströmung des nachgeschalteten Leitgitters bewirkt wird. Im Bereich der ersten Strömungsöffnung, über die der Bypass mit dem Verdichter-Einströmkanal verbunden ist, kann ein Leitgitter, insbesondere ein verstellbares Leitgitter angeordnet sein, über das der Strömungsdrall des rückgeführten Teilmassenstromes bei einem Betrieb im Bereich der Pumpgrenze positiv beeinflusst werden kann.

Die erste Strömungsöffnung mündet vorteilhaft im Bereich stromab der Verdichterrad-Eintrittskante und stromauf der Verdichterrad-Austrittskante in den Verdichter-Einströmkanal und befindet sich somit axial im Verdichterradbereich.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch einen Abgasturbolader mit Abgasturbine mit variabler Turbinengeometrie und Verdichter mit kennfeldstabilisierender Maßnahme, wobei der Abgasturbolader einer schematisch dargestellten Brennkraftmaschine zugeordnet ist,
- Fig. 2: ein Verdichterkennfeld mit Kennlinien für das Druckverhältnis über dem Verdichter in Abhängigkeit vom reduzierten Massenstrom.

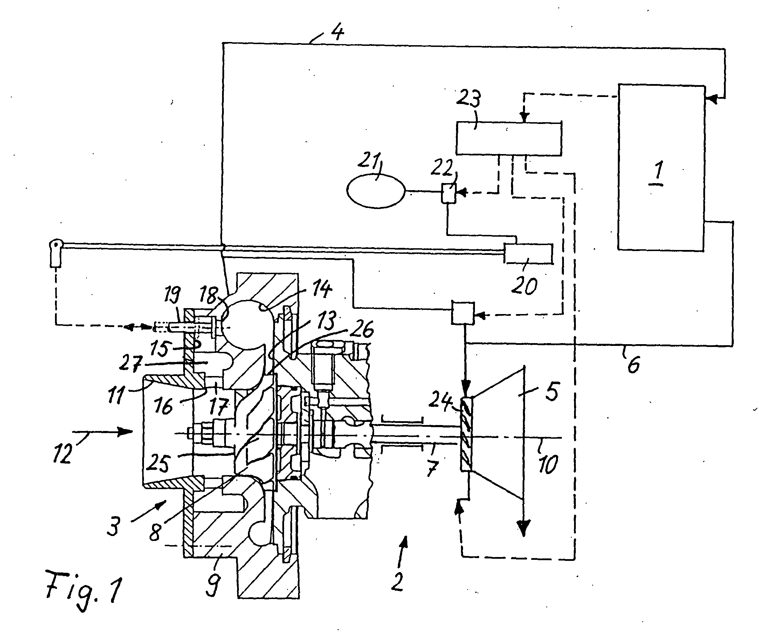

Die in Fig. 1 dargestellte Brennkraftmaschine 1, beispielsweise eine Otto-Brennkraftmaschine oder eine DieselBrennkraftmaschine, umfasst einen Abgasturbolader 2, welcher einen Verdichter 3 im Ansaugtrakt 4 sowie eine Abgasturbine 5 im Abgasstrang 6 der Brennkraftmaschine aufweist, wobei die Abgasturbine 5 von den unter Druck stehenden Abgasen angetrieben wird und die Bewegung des Turbinenrades über eine Welle 7 auf das Verdichterrad 8 übertragen wird, das unter Atmosphärendruck stehende Verbrennungsluft ansaugt und auf einen erhöhten Ladedruck verdichtet. Im Gehäuse 9 des Verdichters 3 ist ein koaxial zur Rotationsachse 10 des Laders angeordneter Einströmkanal 11 vorgesehen, über den Umgebungsluft in Hauptströmungsrichtung 12 angesaugt und dem Verdichterrad 8 zugeführt wird. Nach der Verdichtung wird die Ladeluft radial über einen Diffusor 13 in einen Spiralkanal 14 im Verdichtergehäuse 9 geleitet, aus dem die Ladeluft in den Ansaugtrakt 4 und weiter in den Lufteinlass der Brennkraftmaschine 1 geführt wird.

Im Verdichtergehäuse 9 ist ein Bypass 15 zur Verbindung des Einströmkanals 11 stromauf des Verdichterrades 8 mit dem Spiralkanal 14 stromab des Verdichterrades vorgesehen. Der Bypass 15 kommuniziert über eine erste Strömungsöffnung 16 in der radialen Außenwand mit dem Einströmkanal 11. Im Bereich der ersten Strömungsöffnung 16 kann ein Leitgitter 17 vorgesehen sein, welches insbesondere verstellbar ausgebildet ist. Die erste Strömungsöffnung 16 befindet sich vorteilhaft axial stromab der Verdichterrad-Eintrittskante 25, jedoch stromauf der Verdichterrad-Austrittskante 26 im Übergang zum Diffusor 13. Die erste Strömungsöffnung 16 kann aber auch stromauf der Verdichterrad-Eintrittskante 25 angeordnet sein.

Im Bereich seines gegenüberliegenden Endes kommuniziert der Bypass 15 über eine zweite Strömungsöffnung 18 mit dem Spiralkanal 14, wobei die zweite Strömungsöffnung 18 etwa parallel zur Rotationsachse 10 in den Spiralkanal 14 einmündet. Die zweite Strömungsöffnung 18 ist über ein als Sperrventil 19 ausgeführtes Sperrorgan zu öffnen und zu verschließen, das axial translatorisch zwischen einer Schließstellung und einer Öffnungsstellung zu verstellen ist, wobei in Schließstellung der Bypass abgesperrt und in Öffnungsstellung der Bypass geöffnet ist. Die Stellrichtung des Sperrventils 19 liegt insbesondere parallel zur Rotationsachse 10 des Laders. Das Sperrventil 19 kann in einer ersten zweckmäßigen Ausführung nur die beiden diskreten Stellungen Öffnungsposition und Schließposition einnehmen. In einer alternativen zweckmäßigen Ausführung sind aber auch Zwischenpositionen möglich, um den Strömungsrückfluss von der unter erhöhtem Ladedruck stehenden Ladeluft aus dem Spiralkanal 14 in den Einströmkanal 11 variabel und kontinuierlich steuern zu können.

Das Sperrorgan im Bypass 15 ist über ein Stellglied zwischen Schließ- und Öffnungsposition zu verstellen. Das Stellglied ist im Ausführungsbeispiel als Pneumatikstellglied 20 ausgeführt, das pneumatisch betätigbar ist und mit einem Druckluftspeicher 21 verbunden ist, wobei im Verbindungsweg zwischen Druckluftspeicher 21 und Pneumatikstellglied 20 ein einstellbares Pneumatikventil 22 angeordnet ist, welches über Stellsignale einer Regel- und Steuereinheit 23 in Abhängigkeit von Zustands- und Betriebsgrößen der Brennkraftmaschine 1, des Abgasturboladers 2 sowie gegebenenfalls weiterer Aggregate, die der Brennkraftmaschine zugeordnet sind, einzustellen ist. Über die Regel- und Steuereinheit 23 ist vorteilhaft auch eine variable Turbinengeometrie 24 der Abgasturbine 5 einzustellen, über die der wirksame Strömungsquerschnitt in der Abgasturbine veränderlich einstellbar ist.

Im Bypass 15 ist ein Sammelraum 27 mit erweitertem Querschnitt ausgebildet, welcher unmittelbar benachbart zur ersten Strömungsöffnung 16 liegt, über die der Bypass mit dem Einströmkanal 11 kommuniziert. Der Sammelraum 27 weist ein verhältnismäßig großes Volumen auf, welches insbesondere das Volumen der übrigen Abschnitte des Bypass übersteigt. Das Volumen des Sammelraumes 27 verbessert die Anströmbedingungen für das Leitgitter 17.

Der engste Strömungsquerschnitt des Bypass 15 befindet sich im Bereich der Strömungsöffnung 16, in die das Leitgitter 17 eingesetzt ist.

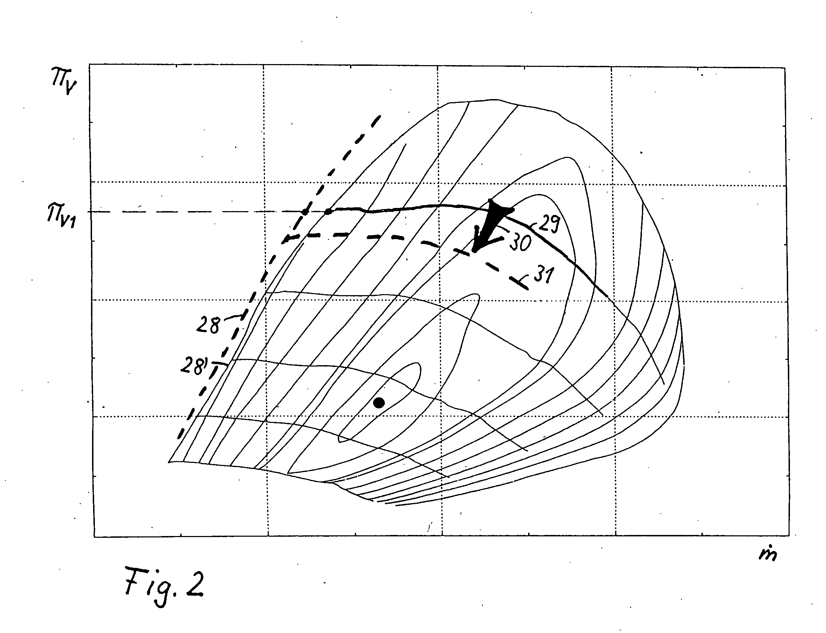

In Fig. 2 ist ein Verdichterkennfeld mit verschiedenen Kennlinien für das Druckverhältnis π_{V} in Abhängigkeit eines reduzierten Referenzmassenstromes *ṁ* dargestellt, wobei das Druckverhältnis π_{V} das Verhältnis des Ladedrucks unmittelbar stromab des Verdichters zum Atmosphärendruck stromauf des Verdichters ausdrückt und der reduzierte Referenzmassenstrom *ṁ* einen Referenzdruck sowie eine Referenztemperatur unter Normalbedingungen berücksichtigt. In das Schaubild ist mit strichpunktierter Linie eine untere Pumpgrenze 28 eingetragen, die das Kennfeld hin zu geringen Massenströmen begrenzt. Die strichpunktierte Linie 28 ist im Vergleich zu einer durchgezogenen Linie 28' bereits zugunsten eines kleineren Massenstromes herabgesetzt, was durch die Aktivierung der kennfeldstabilisierenden Maßnahme durch Öffnen des Bypass erreicht wird. Durch die Aktivierung der kennfeldstabilisierenden Maßnahme wird das Druckverhältnis π_{V} bei ansonsten gleichbleibenden Bedingungen aufgrund des teilweisen Druckausgleiches zwischen Spiralkanal und Einströmkanal von der durchgezogenen Linie 29 gemäß Pfeil 30 zur strichlierten Linie 31 herabgesetzt. Um ein vorgegebenes Druckverhältnis π_{V1} zu erreichen, steigt die hierfür erforderliche Verdichterdrehzahl an. Dies wirkt sich auch positiv auf den Wirkungsgrad der Turbine aus, da dieser bei günstigen Laufzahlen arbeitet. Insbesondere bei niedrigen Motordrehzahlen wird somit nicht nur eine erwünschte Verschiebung der Pumpgrenze 28 zugunsten kleinerer Massenströme erreicht, sondern auch eine Verbesserung des Lader-Gesamtwirkungsgrades.

Um, ausgehend von einem Betriebspunkt bei niedriger Last, den Ladedruck möglichst schnell zu erhöhen, ist eine erhöhte Startdrehzahl des Abgasturboladers zu Beginn des Laststroms von Vorteil. Eine derartige Erhöhung der Laderdrehzahl kann durch Öffnen des Bypass erreicht werden, da - wie oben beschrieben - für einen bestimmten Wert des Ladedrucks bzw. des Druckverhältnisses π_{V} bei geöffnetem Bypass eine höhere Verdichterdrehzahl erforderlich ist. Einen zusätzlichen Vorteil bietet die geöffnete Verbindung zwischen Einströmkanal und Spiralkanal auch für den Fall einer Volllastbeschleunigung, bei der der Verdichter in der Nähe der Pumpgrenze betrieben und entlang der Pumpgrenze 28 hochgefahren wird, und anschließender abrupter Lastwegnahme, wodurch bei herkömmlichen Verdichtern die Gefahr von Verdichterpumpen auftritt, da der Massenstrom hierbei rasch reduziert wird, die Verdichterdrehzahl jedoch auf Grund der Massenträgheit nur vergleichsweise langsam abfällt. Durch die Herabsetzung der Pumpgrenze kann in diesen Situationen die Gefahr von Verdichterpumpen reduziert werden.

Die Einstellung des Sperrorgans im Bypass zwischen Einströmkanal und im Verdichter-Abströmbereich kann auch zur Lastregelung der Brennkraftmaschine, insbesondere einer Otto-Brennkraftmaschine herangezogen werden und die herkömmliche Drosselklappenregelung ganz oder teilweise ersetzen, insbesondere in Kombination mit einer Regelung der variablen Turbinengeometrie des Abgasturboladers.

## Patentansprüche

1. Abgasturbolader in einer Brennkraftmaschine, mit einer Abgasturbine (5) und einem von der Abgasturbine (5) angetriebenen Verdichter (3), der ein Verdichterrad (8) in einem Verdichter-Einströmkanal (11) aufweist, und mit einem Bypass (15) zum Verdichterrad (8), der über eine erste Strömungsöffnung (16) mit dem Verdichter-Einströmkanal (11) und mit einer zweiten Strömungsöffnung (18) mit dem Verdichter-Abströmbereich stromab der Verdichterrad-Austrittskante (26) kommuniziert, wobei ein zwischen einer Schließstellung und einer Öffnungsstellung verstellbares Sperrorgan im Bypass (15) zur veränderlichen Einstellung des wirksamen Strömungsquerschnitts des Bypass (15) vorgesehen ist,
**dadurch gekennzeichnet,**
**dass** das verstellbare Sperrorgan in der zweiten Strömungsöffnung (18) zum Verdichter-Abströmbereich angeordnet ist.

2. Abgasturbolader nach Anspruch 1,
**dadurch gekennzeichnet,**
**dass** der Verdichter-Abströmbereich, mit dem der Bypass (15) über die zweite Strömungsöffnung (18) kommuniziert, ein Spiralkanal (14) des Verdichters (3) ist.

3. Abgasturbolader nach Anspruch 1 oder 2,
**dadurch gekennzeichnet,**
**dass** das Sperrorgan über ein Pneumatikstellglied (20) zwischen Öffnungs- und Schließstellung zu verstellen ist.

4. Abgasturbolader nach Anspruch 3,
**dadurch gekennzeichnet,**
**dass** das Pneumatikstellglied (20) mit einem Druckluftspeicher (21) verbunden ist.

5. Abgasturbolader nach Anspruch 4,
**dadurch gekennzeichnet,**
**dass** im Verbindungsweg zwischen Druckluftspeicher (21) und Pneumatikstellglied (20) ein Pneumatikventil (22) angeordnet ist, das über Stellsignale einer Regel- und Steuereinheit (23) einstellbar ist.

6. Abgasturbolader nach einem der Ansprüche 1 bis 5,
**dadurch gekennzeichnet,**
**dass** das Sperrorgan als translatorisch zwischen Öffnungs- und Schließstellung verschließbares Sperrventil (19) ausgebildet ist, wobei die Stellrichtung des Sperrventils (19) parallel zur Rotationsachse (10) des Abgasturboladers verläuft.

7. Abgasturbolader nach einem der Ansprüche 1 bis 6,
**dadurch gekennzeichnet,**
**dass** im Bypass (15) ein Sammelraum (27) ) mit erweitertem Querschnitt angeordnet ist.

8. Abgasturbolader nach Anspruch 7,
**dadurch gekennzeichnet,**
**dass** der Sammelraum (27) unmittelbar im Bereich der ersten, mit dem Verdichter-Einströmkanal (11) kommunizierenden Strömungsöffnung (16) im Bypass (15) angeordnet ist.

9. Abgasturbolader nach Anspruch 7 oder 8,
**dadurch gekennzeichnet,**
**dass** das Volumen des Sammelraums (27) das Volumen der übrigen Abschnitte des Bypass (15) übersteigt.

10. Abgasturbolader nach einem der Ansprüche 1 bis 9,
**dadurch gekennzeichnet,**
**dass** die erste Strömungsöffnung (16) im Bypass (15) im Bereich stromab der Verdichterrad-Eintrittskante (25) und stromauf der Verdichterrad-Austrittskante (26) mit dem Verdichter-Einströmkanal (11) kommuniziert.

11. Abgasturbolader nach einem der Ansprüche 1 bis 10,
**dadurch gekennzeichnet,**
**dass** in der ersten Strömungsöffnung (16) zum Verdichter-Einströmkanal ein verstellbares Leitgitter (17) angeordnet ist.
